# FASCICULE DE BREVET EUROPEEN

(11) **EP 0 915 006 B1**
(45) Date de publication et mention de la délivrance du brevet: **17.10.2001**
(21) Numéro de dépôt: 98402860.5
(22) Date de dépôt: 18.11.1998
(51) Int. Cl.: B62D 29/00, B62D 25/20, B62D 33/02

(54) **Plate-forme pour un véhicule utilitaire, châssis comprenant une telle plate-forme et véhicule utilitaire comprenant une telle plate-forme**
Ladefläche an einem Nutzfahrzeug, Gestell bestehend aus einer solchen Ladefläche und Nutzfahrzeug, das eine solche Ladefläche enthält
Loading surface for commercial vehicle , chassis comprising such a loading surface , and commercial vehicle comprising such a loading surface

(30) Priorité: 07.10.1998 FR 9812578
(43) Date de publication de la demande: 12.05.1999
(73) Titulaire: General Trailers France, 91042 Evry Cedex (FR)
(72) Inventeur: Gressier, Christophe, 59251 Allennes-les Marais (FR)
(74) Mandataire: Michelet, Alain

(56) Documents cités:
- EP-A- 0 448 428
- EP-A- 0 756 985
- EP-A- 0 823 368
- DE-U- 29 606 451
- US-A- 4 049 285
- US-A- 4 226 465

## Description

L'invention concerne une plate-forme pour un véhicule utilitaire, un châssis comportant une telle plate-forme et un véhicule utilitaire comportant une telle plate-forme.

Les châssis de véhicules utilitaires tels que par exemple les châssis de semi-remorques de type plateau, destinés à recevoir une carrosserie à parois souples ou une carrosserie rigide dans le cas des fourgons, sont pour la plupart constitués de deux poutres longitudinales de section en I appelées longerons. Ces longerons sont entretoisés au moyen de traverses sur lesquelles on dispose un plancher de chargement appelé aussi plateau.

Cette conception des châssis implique, sur le plan de la fabrication, une intervention manuelle pour effectuer le soudage des traverses au flanc latéral correspondant de chacun des longerons. Selon la conception détaillée choisie, il peut même être nécessaire d'insérer les traverses, avant soudage, dans des ouvertures préalablement pratiquées dans les longerons.

Les plateaux utilisés jusqu'à maintenir pour des véhicules utilitaires, présentent souvent, selon l'utilisation prévue du véhicule, un plancher en bois, ce qui permet le clouage de tasseaux et ainsi l'immobilisation de masses indivisibles. Le plancher peut également être pourvu de rails d'arrimage ou d'autres éléments de fixation montés sur le plancher.

Une plate-forme constituée par une pluralité de profilés disposée longitudinalement dans le sens de la marche du véhicule est connue du document EP-A-0823368. Les profilés de cette plate-forme sont réalisés en un alliage léger et ont une structure en treillis, ce qui rend la plate-forme autoportante.

Le but de l'invention est d'améliorer la conception du plateau et du châssis d'un véhicule utilitaire de façon à simplifier leur fabrication.

Accessoirement, il serait souhaitable de pouvoir réduire le poids à vide du véhicule utilitaire.

Le but de l'invention est atteint par une plate-forme pour un véhicule utilitaire formé par au moins deux profilés en métal léger disposés longitudinalement dans le sens de la marche du véhicule et ayant une structure en treillis. La structure en treillis rend le profilé, et ainsi la plate-forme, autoportante.

L'utilisation d'un profilé en métal léger, avantageusement en un alliage d'aluminium, formant à lui seul ou avec un ou plusieurs autres profilés de même conception, une plate-forme autoportante d'un véhicule utilitaire rend possible de se libérer pour le moins de l'utilisation de traverses. La fonction des traverses est remplie par la plate-forme. Compte-tenu de la rigidité du plateau que l'on peut obtenir grâce à l'utilisation de profilés ayant une structure en treillis, il est également possible de se libérer de l'utilisation de longerons. Dans ce cas, le ou les essieux sont fixés directement à la plate-forme.

Le nombre de profilés composant la plate-forme dépend des capacités de filage. Il est ainsi concevable que la plate-forme soit constituée par un seul profilé aussi bien qu'elle puisse être formée par deux ou plusieurs profilés disposés longitudinalement l'un adjacent à l'autre et assemblés par soudage. Le type de soudage est choisi en fonction de la nature du métal léger utilisé et selon des critères pratiques liés à la fabrication de la plate-forme.

L'utilisation d'un ou de plusieurs profilés en métal léger pour former la plate-forme apporte par ailleurs l'avantage de pouvoir automatiser entièrement aussi bien le soudage de la plate-forme, lorsque celle-ci est constituée par deux ou plusieurs profilés, que le soudage des longerons éventuellement ajoutés et/ou des éléments de fixation de l'essieu.

L'utilisation de profilés ayant une structure en treillis, c'est-à-dire l'utilisation - de profilés formés par une peau supérieure et une peau inférieure reliées entre elles par des voiles inclinés et par des voiles verticaux ou, selon une variante, par des voiles inclinés seuls, permet de réduire le poids à vide du véhicule utilitaire tout en conservant les caractéristiques de stabilité nécessaires pour la construction d'un véhicule utilitaire de grande longueur.

L'utilisation de profilés ayant une structure en treillis permet également d'intégrer dans la forme du profilé des éléments tels que des éléments de fixation ou d'arrimage et des rails d'arrimage, qui devaient jusqu'à maintenant être ajoutés à la plate-forme. La conception de la plate-forme selon l'invention permet également de former les profilés de façon à ce qu'ils reçoivent un ou plusieurs éléments d'équipement par clipsage. Le terme « élément d'équipement » englobe dans le contexte de la présente invention tout élément nécessaire ou obligatoire pour que le véhicule soit admissible à la circulation routière tel que des feux de signalisation arrière et latéraux et des dispositifs antiprojection, ainsi que tout élément permettant à la plate-forme de recevoir une carrosserie à parois souples ou rigides, tel que des pieds de poteaux ou rancher et des élargisseurs de poteaux, et des éléments nécessaires à la disposition et à la fixation d'une charge à transporter, sur la plate-forme.

L'utilisation d'un ou de plusieurs profilés pour constituer une plate-forme autoportante selon l'invention permet par ailleurs de maintenir la possibilité de présenter le véhicule utilitaire avec une plate-forme garnie de planches de bois permettant le clouage de tasseaux et ainsi l'immobilisation de masses indivisibles. Les planches de bois sont alors localement intégrées dans le ou les profilés dans des échancrures prévues à cet effet.

De façon particulièrement avantageuse, ces échancrures sont formées de façon à pouvoir y insérer, de manière définitive ou de manière interchangeable, des éléments de plancher en métal léger ou en bois ou encore des éléments constituant des rails d'arrimage. Cette conception permet de standardiser les profilés destinés à la réalisation de plates-formes. Une insertion interchangeable de ces éléments permet, par ailleurs, à l'utilisateur du véhicule utilitaire d'adapter le plancher successivement aux différentes missions à effectuer.

L'utilisation de profilés ayant une structure en treillis pour constituer des plates-formes selon l'invention permet de plus de réaliser des véhicules utilitaires avec une grande variété d'accessoires suspendus en dessous de la plate-forme sans que cela rende la fabrication des plates-formes plus difficiles. Au contraire, les profilés pouvant être obtenus avec une grande variété de formes, ceux-ci peuvent être formés de façon à inclure des parties de profil destinées à recevoir, par clipsage ou encliquetage, des accessoires tels que des coffres à outils, des coffres à planches, des extincteurs, des cales de roues, des plaques signalétiques (« Matière Dangereuse » etc...), un escabeau, une barre de manoeuvre pour le rideau, un porte-documents et des arrêts de portes.

Les profilés peuvent également être pourvus de parties de profils constituant par exemple une goulotte pour des câbles électriques ou des conduits pneumatiques ou servir comme un élément d'arrimage.

Cette dernière variante est représentative de la possibilité de former les profilés utilisés selon l'invention, en une seule pièce avec différents éléments, tels que les éléments d'arrimage.

D'autres caractéristiques et avantages de la plate-forme autoportante selon l'invention ressortiront plus loin de la description de quelques exemples de réalisation faite en référence aux figures.

L'invention concerne également un châssis d'un véhicule utilitaire pourvu d'une plate-forme autoportante telle que décrite plus haut. Le châssis selon l'invention est exempt de traverses.

Le châssis de l'invention est avantageusement également exempt de longerons. Toutefois, il peut s'avérer plus facile, pour certaines réalisations, que le châssis comprenne deux longerons.

Lorsque le châssis est exempt de longerons, le ou les essieux sont fixés directement sur la face inférieure de la plate-forme. L'essieu lui-même étant en acier, mais les éléments reliant l'essieu à la plate-forme, tels que les éléments de fixation, pouvant être réalisés en métal léger, des mesures appropriées sont prises pour réduire le plus possible, ou même pour supprimer, la formation d'éléments électrolytiques à la jonction entre acier et métal léger.

L'invention concerne également un véhicule utilitaire comprenant une plate-forme autoportante telle que décrite plus haut et un châssis exempt de traverses.

L'absence de traverses dans le châssis selon l'invention et le fait que la fonction des traverses est remplie par la plate-forme selon l'invention et notamment par l'utilisation de profilés ayant une structure en treillis pour former la plate-forme selon l'invention, permet de disposer toutes les soudures reliant le ou les profilés, les longerons éventuels et le ou les essieux entre eux, dans une seule direction, ici longitudinalement, et de libérer ainsi le procédé de fabrication d'étapes de soudage s'opposant à une automatisation.

La description de quelques modes de réalisation de l'invention est faite en référence aux dessins dans lesquels:

La Figure 1 montre, en coupe transversale, une plate-forme auto-portante selon l'invention.

La Figure 2 montre une plate-forme selon l'invention avec une structure de base modulable (a) et avec trois variantes (b),(c) et (d).

La Figure 3 montre une plate-forme continue selon l'invention (a) et trois variantes (a), (b), (c), (d).

La Figure 4 montre quatre variantes de disposition des voiles des profilés utilisés pour la plate-forme selon l'invention.

Les Figures 5 à 11 représentent des exemples d'éléments d'équipement et leurs dispositions sur la plate-forme selon l'invention.

Les Figures 12 et 13 montrent un bord de rive multifonctions avec des éléments d'équipement.

Les Figures 14 à 18 montrent, en détail, les profilés formant la plate-forme selon l'invention telle que représentée sur la Figure 1

La Figure 19 montre, en coupe transversale, la jonction de deux profilés d'une plate-forme selon l'invention, les profilés n'ayant pas de voiles verticaux, et

La Figure 20 montre, en coupe transversale, un profilé de la plate-forme selon la Figure 1 pourvu d'un longeron.

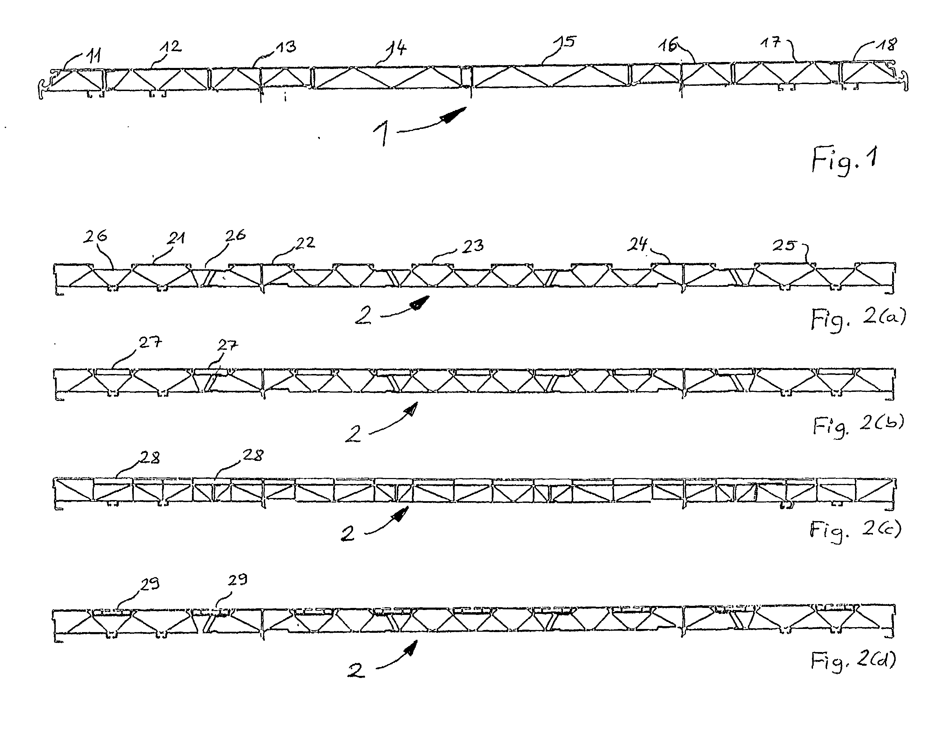

La plate-forme 1 représentée schématiquement sur la Figure 1 en coupe transversale, est une plate-forme autoportante constituée de huit profilés. Ces profilés sont, de gauche à droite, un profilé rive latérale gauche 11, un profilé rive extérieure gauche 12, un profilé support gauche 13 pour longeron, un profilé central gauche 14, un profilé central droit 15, un profilé support droit 16 pour longeron, un profilé rive extérieure droite 17 et un profilé rive latérale droite 18. Les profilés 16, 17 et 18 sont les mêmes profilés que les profilés 11, 12 et 13 à l'exception de leur disposition pour former la plate-forme 1. En effet, les extrémités correspondantes des profilés 11, 12 et 13 d'une part, et des profilés 16, 17 et 18 d'autre part sont orientées dans des sens opposés les uns par rapport aux autres. De ce fait, la plate-forme 1 de la Figure 1 est constituée de cinq types de profilés, ce qui réduit sensiblement le nombre de profilés différents à fabriquer.

En ce qui concerne les profilés 14 et 15, la situation diffère de celle des profilés 11 à 13 et 16 à 18, puisque ces deux profilés sont formés de façon à permettre un ajustage de la largeur de la plate-forme lors de l'assemblage de cette dernière. En effet, comme cela sera expliqué plus loin, les profilés 14 et 15 sont formés, aux bords latéraux destinés à être mis en regard, avec des pattes d'assemblage de longueurs différentes.

L'utilisation des profilés 13 et 16 dits support pour longeron, dans le présent exemple d'une plate-forme, n'implique pas que tous les véhicules comportant une telle plate-forme soient pourvus de longerons.

La plate-forme autoportante 1 est une plate-forme continue, c'est-à-dire la surface supérieure destinée à recevoir les charges à transporter forme un plan unique.

La Figure 2 montre, en une coupe transversale schématisée, une plate-forme 2 ayant une structure de base modulable. La plate-forme 2 est constituée par cinq profilés référencés 21 à 25. Ces profilés ont une surface interrompue par des échancrures 26 destinées à recevoir différents éléments de plancher 27, 28 ou 29 (Figure 2(a)). Les éléments de plancher, montrés à titre d'exemple non limitatif, sont respectivement un élément de plancher 27 en aluminium clipsé dans l'échancrure 26 (Figure 2(b)), un élément en bois 28 permettant le clouage de tasseaux ou de tout autre élément pouvant être fixé par des clous (Figure 2(c)), et un rail d'arrimage permettant, par exemple, la mise en place d'un anneau d'arrimage (Figure 2(d)).

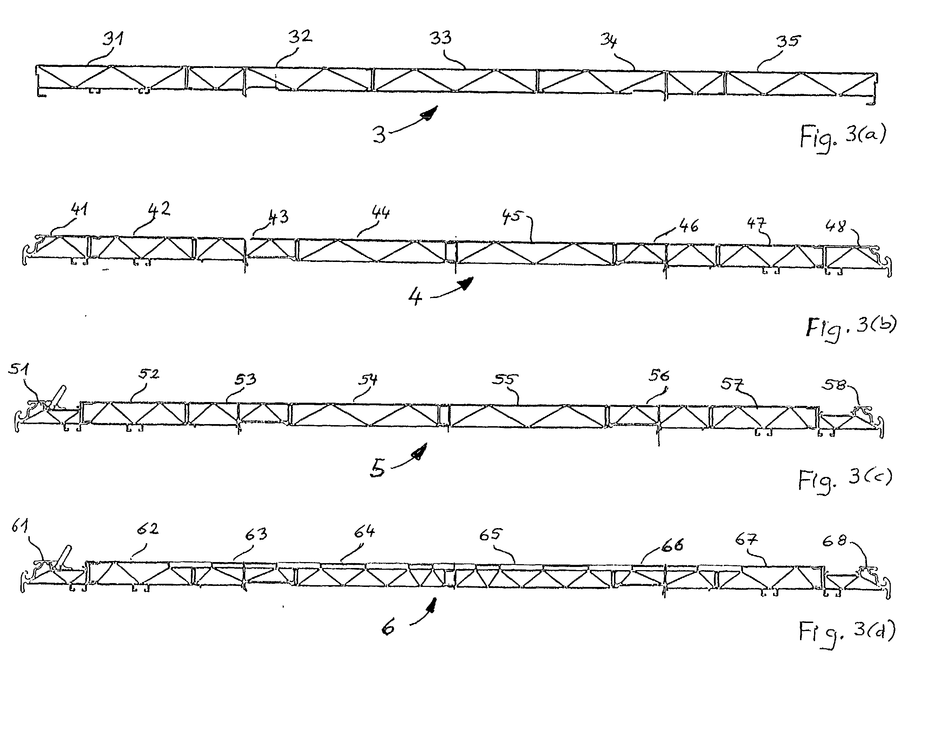

La Figure 3 montre quatre plates-formes différentes 3 à 6. La plate-forme 3 est constituée de cinq profilés 31 à 35 et présente une surface supérieure continue (Figure 3(a)). La plate-forme 4 est constituée de huit profilés 41 à 48. Les profilés 41 et 48 sont des profilés multifonction identiques montés dans des sens opposés (Figure 3(b)). La plate-forme 4 présente une surface continue sur presque la largeur complète de la plate-forme. La plate-forme 5 est constituée de huit éléments 51 à 58 et présente une surface continue sur la largeur de l'ensemble des profilés 52 à 57 (Figure 3(c)). La structure des profilés 52 à 57 est identique à celle des profilés 42 à 47 de la plate-forme 4. Les profilés 51 et 58 sont identiques l'un à l'autre, mais disposés dans des sens opposés, et se distinguent des profilés 41 et 48 de la plate-forme 4 par leur structure qui permet une fixation d'anneaux d'arrimage intégrés. La plate-forme 6 est constituée de huit profilés 61 à 68 dont les profilés 62 à 67 sont pourvus d'échancrures dans lesquelles sont intégrées des planches de bois (Figure 3(d)). Les profilés 61 et 68 sont des rives multifonctions dont la structure correspond à celle des profilés 51 et 58 de la plate-forme 5.

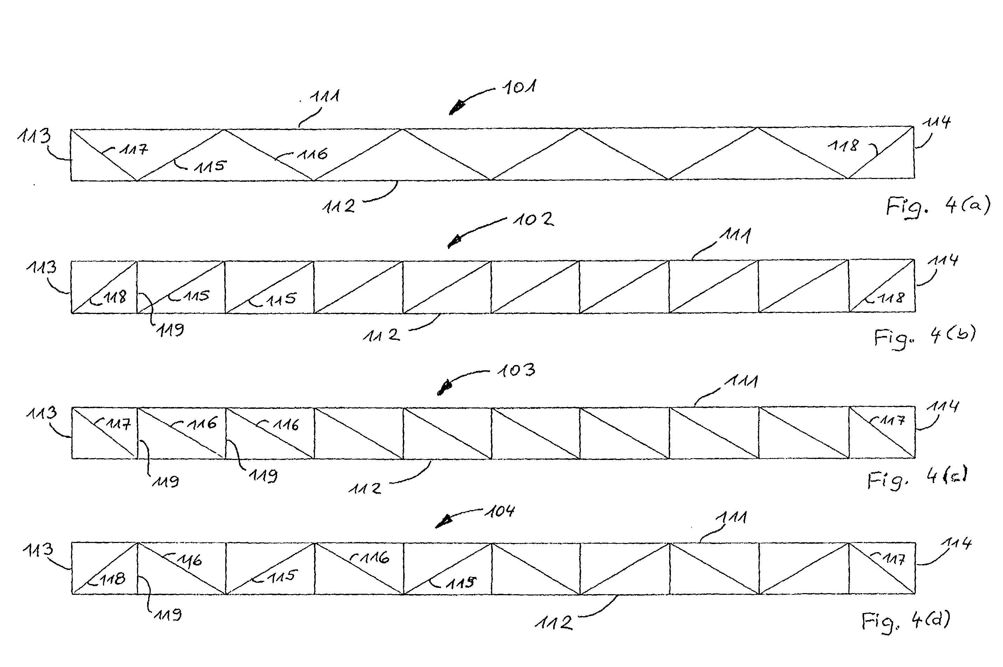

La Figure 4 montre quatre dispositions différentes (a) à (d) des voiles d'un profilé destiné à former seul ou avec d'autres profilés, une plate-forme selon l'invention. Les quatre schémas (a), (b), (c) et (d) montrent quatre profilés 101, 102, 103 et 104 dont chacun est formé par quatre parois extérieures, également appelés peau, à savoir une peau supérieure 111, une peau inférieure 112 et deux peaux latérales 113 et 114. Les peaux supérieures et inférieures sont reliées entre elles, outre par les parois latérales 113 et 114, par les voiles inclinés et, selon la variante choisie, également par des voiles verticaux. La quantité de voiles ainsi que leur disposition angulaire dépendent des dimensions du profilé ainsi que de la charge à répartir.

Dans les exemples représentés sur la Figure 4, la peau supérieure 111 et la peau inférieure 112 sont reliées entre elles, en dehors des peaux latérales 113 et 114, dans la variante (a) uniquement par des voiles obliques et dans les variantes (b), (c) et (d) par une combinaison de voiles inclinés et voiles verticaux. La répartition des points de jonction entre les voiles et respectivement la peau supérieure ou la peau inférieure est semblable pour les quatre variantes.

Ainsi, le profilé 101 comprend quatre voiles 115 inclinés vers la droite, quatre voiles 116 inclinés vers la gauche et formant un même angle avec la peau inférieure que les voiles 115, ainsi que deux voiles 117 et 118 inclinés respectivement vers la gauche et vers la droite et dont les dimensions et l'inclinaison sont différentes de celles des voiles 115 et 116. Il va sans dire que les voiles 115 à 118 peuvent également être conçus de façon à présenter des dimensions et une inclinaison uniques.

Les profilés 102 et 103 comprennent chacun huit voiles inclinés 115, deux voiles inclinés 118 et neuf voiles verticaux 119. Les voiles inclinés et les voiles verticaux sont disposés de façon à présenter un motif de dents de scie. Selon l'orientation donnée au profilé lors du montage de la plate-forme, les voiles inclinés sont obliques vers la droite ou vers la gauche.

Le profilé 104 ressemble au profilé 101 dans la mesure où il comprend quatre voiles inclinés 115, quatre voiles inclinés 116, un voile incliné 117 et un voile incliné 118. Le profilé 104 diffère du profilé 101 en ce qu'il comprend en plus neuf voiles verticaux 119.

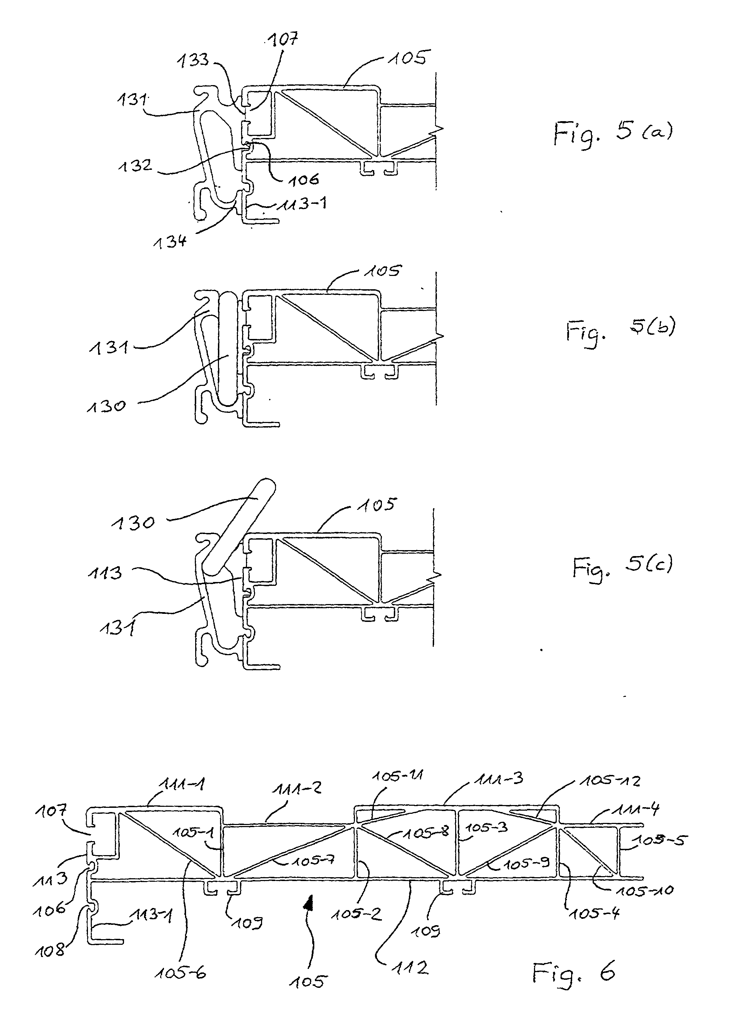

Les profilés 101 à 104 représentés sur la Figure 4 comprennent des voiles de même dimension et de même inclinaison, d'où la référence identique pour les mêmes voiles indépendamment de leur disposition à l'intérieur du profilé 101, 102, 103 ou 104. D'autres inclinaisons et dimensions des voiles inclinés sont représentées sur la Figure 1 où la plate-forme est constituée par plusieurs profilés, et où la dimension et l'inclinaison des voiles inclinés diffèrent d'un profilé à l'autre. D'autres dimensions et inclinaison sont représentées sur les Figures 5 à 10 et 12 à 18.

La Figure 5 montre un exemple de disposition d'un élément d'équipement, à savoir la disposition d'un anneau d'arrimage 130 supporté par un support 131 clipsé et boulonné ou soudé sur la face latérale de la rive 105. La Figure 5 montre, en trois vues successives (a), (b) et (c), la disposition du support sur la face latérale de la rive 105, pourvue d'une patte de prolongation 113-1 de la peau 113: sans anneau 130, avec l'anneau 130 en position de repos et avec l'anneau 130 en position d'arrimage. Le support 131 est clipsé sur la rive 105 au moyen d'un bec 132 et d'une protubérance 133, l'un et l'autre étant emboîtés respectivement dans un creux 106 et une ouverture 107 pratiquée à cet effet dans la peau latérale 113 du profilé 105. Le bord inférieur 134 du support 131 est en appui sur la patte 113-1 et attaché à cette dernière au moyen de boulons ou par soudage.

La Figure 6 représente le profilé 105 entièrement. Le profilé 105 présente une peau supérieure 111 divisée en des sections 111-1 à 111-4, les sections 111-2 et 111-4 étant à un niveau inférieur par rapport à celui des sections 111-1 et 111-3. La différence de niveau entre ces sections définit des échancrures dans la surface supérieure du profilé 105, échancrures qui correspondent, exception faite de leur fonction précise, aux échancrures 26 représentées sur la Figure 2 (a). Ces échancrures peuvent recevoir des planches de bois ou d'autres éléments d'équipement. Le profilé 105 est pourvu, par ailleurs, dans la patte de prolongation 113-1 de la peau 113, d'un creux 108 symétrique au creux 106. De plus, le profilé 105 est pourvu sur sa face inférieure, c'est-à-dire sur la peau 112, de deux rails de fixation 109.

La peau supérieure 111 et la peau inférieure 112 du profilé 105 sont reliées entre elles par des voiles verticaux 105-1 à 105-5, par des voiles inclinés 105-6 à 105-10 partant chacun de la peau inférieure 112, ainsi que par des voiles obliques 105-11 et 105-12 partant de la section de peau supérieure 111-3.

Le profilé 105 se distingue des autres profilés décrits ci-avant, en ce que les voiles inclinés ont chacun leur propre inclinaison et en ce que seuls les voiles inclinés 105-8 et 105-9, d'une part, et les voiles inclinés 105-11 et 105-12 d'autre part, ces quatre voiles étant disposés en dessous de la section 111-3 de la peau supérieure 111, sont symétriques et en opposition les uns par rapport aux autres. Les voiles 105-11 et 105-12 constituent dans cette configuration une sorte de prolongation, à des angles différents, respectivement des voiles 105-7 et 105-10.

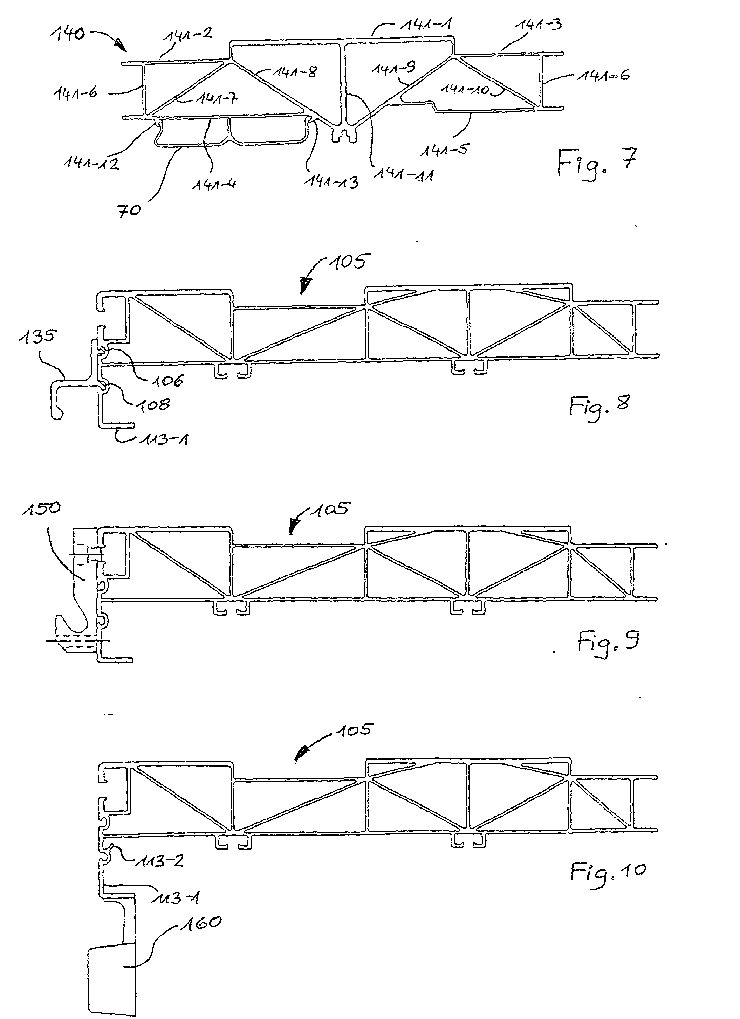

La Figure 7 montre encore un autre mode de réalisation d'un profilé destiné à être utilisé pour former une plate-forme selon l'invention. Le profilé 140 est constitué par une peau supérieure étagée 141-1, 141-2 et 141-3, une peau inférieure discontinue comprenant les parties 141-4 et les parties étagées 141-5, ainsi que par deux voiles latéraux verticaux 141-6, quatre voiles inclinés 141-7 à 141-10 et un voile vertical central 141-11. La peau inférieure est pourvue, dans sa section 141-4, de deux becs 141-12 et 141-13 dans lesquels est encliquetée ou clipsée une goulotte 70 pour le passage de câbles et de conduites pneumatiques.

Les Figures 8 à 10 montrent le profilé 105 tel qu'il a été décrit en détail en référence à la Figure 6, mais équipé respectivement d'un élargisseur 135, d'un pied de rancher 150 et d'un feu latéral 160. Des élargisseurs 135 sont utilisés dans le cas de carrosseries à parois souples et sont destinés à aligner le rideau avec le gabarit extérieur des poteaux supportant les parois souples. Les élargisseurs 135 sont disposés entre les poteaux et sont clipsés dans la peau latérale 113 dans les creux 106 et 108 prévus à cet effet. Les pieds de rancher 150 sont fixés au profilé 105 au moyen de boulons. Les pieds de rancher 150 sont destinés à recevoir les ranchers, c'est-à-dire des poteaux mobiles destinés à supporter les parois souples. Le feu latéral 160 constitue un autre exemple de garniture du profilé 105 avec un élément d'équipement. Le feu latéral 160 est attaché à la patte 113-1 au moyen d'un boulon. Les câbles pour le feu latéral 160 ainsi que pour d'autres feux de signalisation du véhicule sont disposés dans une goulotte 113-2 formée sur la patte 113-1 du côté intérieur de la plate-forme.

La Figure 11 montre une autre application pour la forme de la peau latérale 113 du profilé 105. II s'agit du montage d'un bandeau anti-projection, plus particulièrement de la fixation d'une jupe latérale 161 et d'une jupe verticale 162 représentées en perspective sur la Figure 11 (a) et de la fixation de la jupe latérale 161 représentée en section transversale sur la Figure 11 (b).

La Figure 12 montre l'utilisation d'un profilé de rive latérale 19 ou profilé multifonctions pour la fixation d'un feu latéral 160 et d'un rancher 170. Le pied de rancher est intégré dans le profil du profilé 19. La Figure 12 montre, en traits interrompus et en traits continus la cinématique du relevage d'un rancher 170: la position (a) est la position d'insertion du rancher 170 dans le pied de rancher, la position (b) indique une position intermédiaire lors du relevage du rancher 170 vers la position verticale et la position (c) indique la position verticale du rancher 170 après relevage.

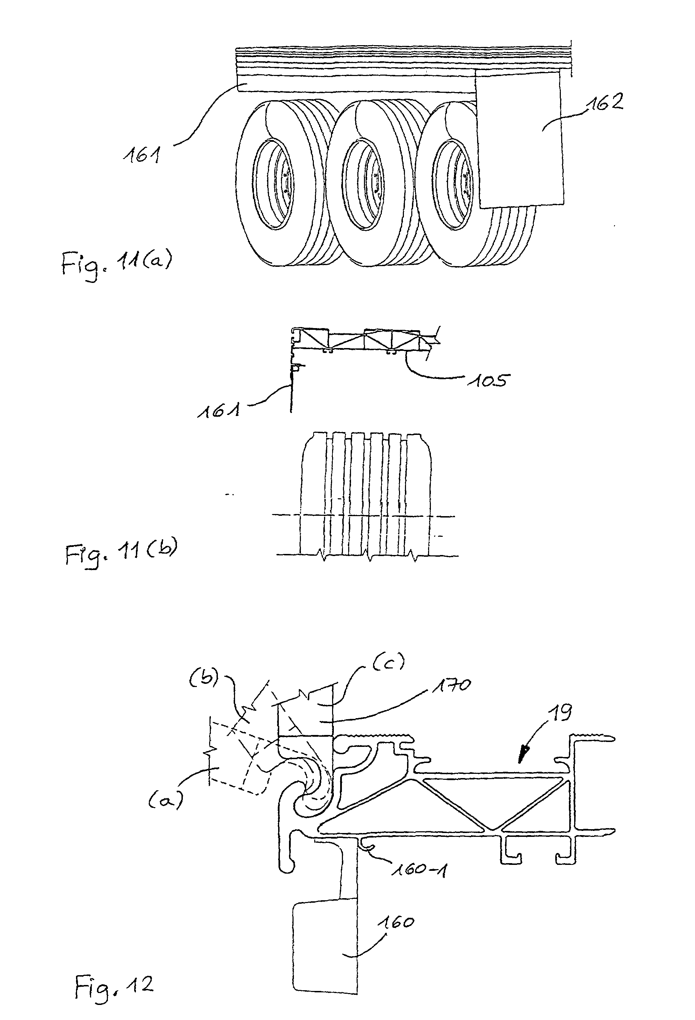

La Figure 12 montre en même temps la présence d'une goulotte 160-1 formée sur la peau inférieure du profilé 19. Cette goulotte 160-1 correspond, en ce qui concerne sa fonction, à la goulotte 113-2 représentée sur la Figure 10 et décrite ci-avant, c'est-à-dire pour le passage des câbles du feu latéral 160 et pour d'autres feux de signalisation.

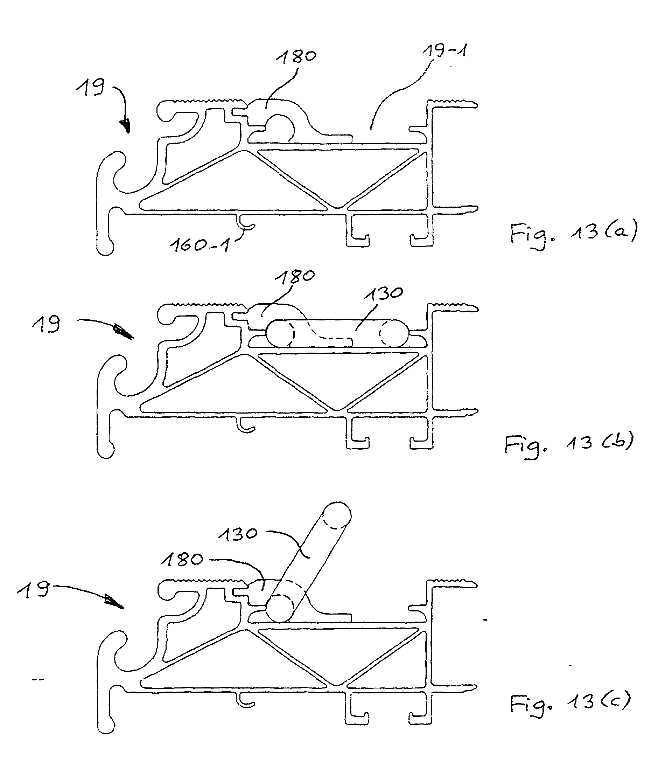

La Figure 13 représente une variante du profilé 19 de la Figure 12, variante en ce qui concerne la disposition de la goulotte 160-1. Selon l'application représentée sur la Figure 13, le profilé 19 sert à la fixation d'un anneau d'arrimage intégré sur la peau supérieure du profilé 19. Cette disposition est obtenue par la fixation d'un support d'anneau d'arrimage 180 dans une échancrure 19-1 pratiquée dans la surface supérieure du profilé 19. La disposition selon la Figure 13 permet de positionner l'anneau d'arrimage sur le profilé 19 et ainsi sur la plate-forme et non pas, comme cela correspondrait à la disposition représentée sur la Figure 5, sur le côté latéral de la plate-forme. Afin de ne pas gêner le chargement de la plate-forme, les dimensions du support 180 sont choisies de façon à ce que l'anneau d'arrimage 130, lorsqu'il est dans sa position de repos, aussi bien que le support 180 lui-même ne dépassent pas le niveau de la peau supérieure du profilé 19. Sur la Figure 13, sont représentées en (a) uniquement la disposition du support 180, en (b) le support 180 avec l'anneau d'arrimage 130 en position de repos et en (c) l'anneau 130 en position d'arrimage.

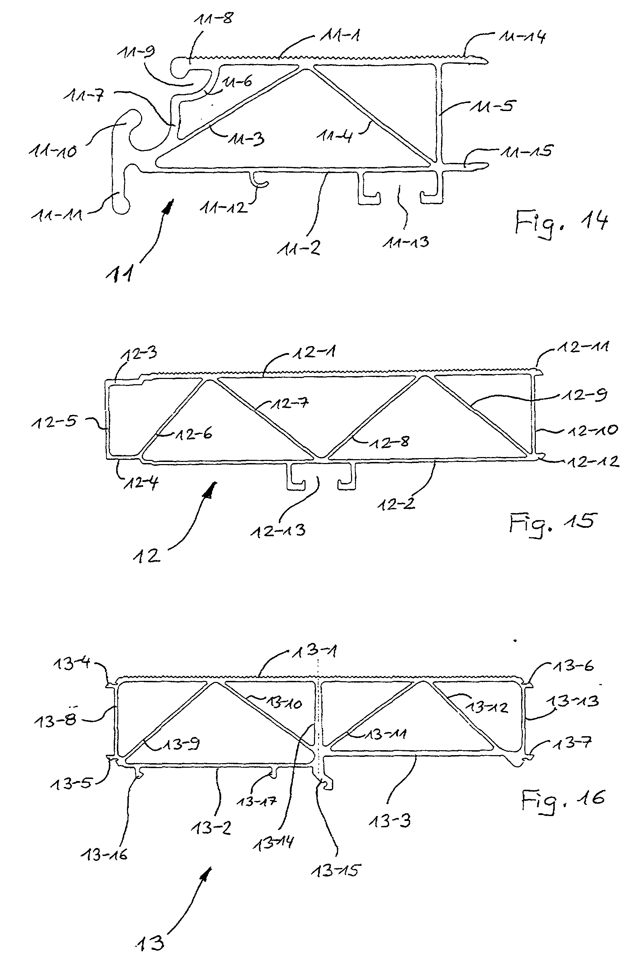

Les Figures 14 à 18 représentent, en coupe transversale, la conception des profilés 11 à 15 et des profilés 16 à 18, décrits plus haut en référence à la Figure 1.

Le profilé 11 comprend une peau supérieure 11-1, une peau inférieure 11-2, des voiles inclinés 11-3 et 11-4 ainsi qu'un voile vertical 11-5. Les voiles inclinés 11-3 et 11-4 sont disposés en opposition et forment des angles différents avec la peau inférieure 11-2 d'où ils partent vers la peau supérieure 11-1. Les voiles 11-3 et 11-4 ont une épaisseur de quelques millimètres, avantageusement de l'ordre de 2 à 3 mm. L'épaisseur de la peau inférieure 11-2 est également de l'ordre de 2 à 3 mm alors que l'épaisseur de la peau supérieure 11-1 est de l'ordre de 4 à 5 mm. L'épaisseur du voile vertical 11-5 est de l'ordre de 3 mm.

La peau supérieure 11-1 et la peau inférieure 11-2 sont reliées par ailleurs par une paroi en courbe présentant deux sections courbées 11-6 et 11-7. La première section 11-6 part de la peau supérieure 11-1 à une distance de l'extrémité libre de celle-ci, et forme avec une section 11-8 ainsi définie de la peau supérieure 11-1, un creux 11-9. La seconde section 11-7 forme avec une goulotte 11-10 partant de la jonction entre la peau inférieure 11-2, le voile incliné 11-3 et la section courbe 11-7, un pied pour l'insertion d'un rancher (voir Figure 12). La goulotte 11-10 est prolongée vers la face inférieure du profilé 11 par un profil 11-11 permettant, par exemple, la fixation de sangles, tout comme au creux 11-9 ou à la section 11-8, mais sans ouvrir le rideau d'une paroi souple.

Le profilé 11 est par ailleurs pourvu d'une goulotte 11-12 pour le passage de câbles, et d'un rail 11-13 pour la fixation, éventuellement avec un autre rail de ce type, de divers éléments d'équipement tels que des coffres divers (à outils, à planches .....), d'un extincteur, d'une barre de manoeuvre des rideaux dans le cas d'une carrosserie à parois souples, des cales de roue, des plaques « matière dangereuse », d'un porte-documents, d'un escabeau arrière pour l'accès à la plate-forme, de protections latérales telles que celles représentées schématiquement sur la Figure 11 ou des arrêts de porte.

Afin de rendre possible l'assemblage du profilé 11 avec un autre profilé, le profilé 11 est pourvu de deux pattes 11-14 et 11-15 prolongeant respectivement la peau supérieure 11-1 et la peau inférieure 11-2. Ces pattes sont suffisamment longues pour permettre un assemblage avec un autre profilé dont la face latérale est formée de manière appropriée, et un ajustage de la largeur de la plate-forme lors de son assemblage.

Le profilé 11 est un exemple pour une réalisation d'un profilé destiné à former, avec un autre profilé, une plate-forme selon l'invention, et dans lequel les voiles inclinés ne sont pas symétriques par rapport à un plan central du profilé et ont des dimensions et inclinaisons différentes les unes des autres.

Le profilé 12 comprend une peau supérieure 12-1, une peau inférieure 12-2 et des sections de prolongation 12-3 et 12-4 prolongeant respectivement, mais parallèlement décalées par rapport à celles-ci, la peau supérieure 12-1 et la peau inférieure 12-2. Les sections 12-3 et 12-4 sont disposées de manière que la distance entre les peaux supérieure et inférieure 12-1 et 12-2 soient supérieures à la distance entre les faces supérieure et inférieure des sections de prolongation 12-3 et 12-4. Cet étagement entre la peau supérieure 12-1 et la face supérieure de la section 12-3, d'une part, et entre la peau inférieure 12-2 et la face inférieure de la section 12-4, d'autre part, est nécessaire afin qu'un assemblage des profilés 11 et 12 (voir Figure 1) soit possible. Les dimensions de ces étagements sont choisies selon l'écart entre les sections 11-14 et 11-15 du profilé 11.

Les peaux supérieure 12-1 et inférieure 12-2 sont reliées entre elles par un voile vertical 12-5 disposé entre les sections de prolongement 12-3 et 12-4, par quatre voiles inclinés 12-6 à 12-9 et par un voile vertical 12-10 disposé du côté opposé par rapport au voile 12-5 et à une faible distance des extrémités respectives des peaux supérieure 12-1 et inférieure 12-2 de façon à définir des pattes d'assemblage 12-11 et 12-12. Les pattes d'assemblage 12-11 et 12-12 sont destinées à l'assemblage du profilé 12 au profilé 13 décrit ci-après. Le profilé 12 est pourvu, par ailleurs, d'un rail 12-13 disposé sur la face inférieure du profilé 12 et servant, ensemble avec le rail 11-13 décrit plus haut, à la fixation d'éléments d'équipement.

La disposition des voiles inclinés est choisie en fonction des dimensions du profilé 12 et en fonction de la charge à supporter. Dans l'exemple représenté, chacun des quatre voiles inclinés 12-6 à 12-9 diffère de l'autre aussi bien en ce qui concerne ses dimensions que son inclinaison. Les épaisseurs des voiles verticaux et des voiles inclinés sont de l'ordre de 2 à 3 mm, l'épaisseur de la peau supérieure est de l'ordre de 4 à 5 mm, et l'épaisseur de la peau inférieure est de l'ordre de 2 à 3 mm.

Le profilé 13 comprend une peau supérieure 13-1 et une peau inférieure en deux sections, référencées respectivement 13-2 et 13-3. La distance entre la peau supérieure 13-1 et la section 13-2 de la peau inférieure est plus grande que la distance entre la peau supérieure 13-1 et la section 13-3 de la peau inférieure. Pour l'assemblage du profilé 13 avec les profilés adjacents, la peau supérieure 13-1 est prolongée de part et d'autre, de façon étagée, par des pattes d'assemblage 13-4 et 13-6. De façon comparable, la peau inférieure est prolongée de part et d'autre, à partir de la section correspondante 13-2 et 13-3, par des pattes d'assemblage 13-5 et 13-7. Les écartements entre les pattes d'assemblage 13-4 et 13-5, d'une part, et entre les pattes d'assemblage 13-6 et 13-7, d'autre part, sont déterminés en fonction des pattes d'assemblage correspondantes des profilés destinés à être assemblés au profilé 13.

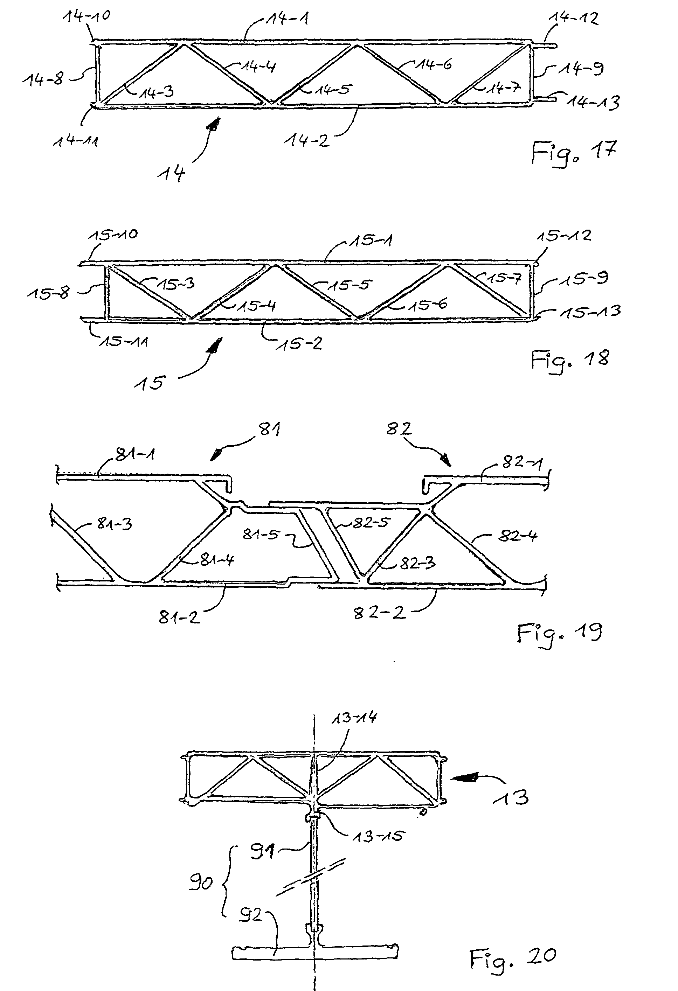

Les peaux supérieure et inférieure du profilé 13 sont reliées entre elles par un voile vertical 13-8, quatre voiles inclinés 13-9 à 13-12 et un voile vertical 13-13, ainsi que par un voile vertical 13-14 disposé proche du plan central du profilé 13. Le voile vertical 13-14 est prolongé au-delà de la peau inférieure 13-2 par un profil 13-15 destiné à recevoir, le cas échéant, un longeron comme cela est décrit plus en détail en référence à la Figure 20. Le profilé 13 est pourvu, par ailleurs, de deux becs 13-16 et 13-17 dans lesquels peut être encliquetée ou clipsée une goulotte pour le passage de câbles et de conduites pneumatiques.

Les profilés inclinés 13-9 à 13-12 ont chacun leurs propres dimensions, indépendantes de celles des autres voiles, leur épaisseur étant de l'ordre de 2 à 3 mm. En ce qui concerne l'inclinaison des voiles inclinés, les voiles inclinés 13-10 et 13-11 sont disposés symétriquement l'un par rapport à l'autre par rapport au plan médian du voile vertical 13-14. L'épaisseur de la peau supérieure 13-1 est de l'ordre de 4 à 5 mm, l'épaisseur de la peau inférieure est de l'ordre de 2 à 3 mm dans la section 13-2 et de l'ordre de 4 à 5 mm dans la section 13-3.

Dans les profilés décrits jusqu'ici, les voiles verticaux ont une épaisseur constante sur toute leur hauteur. Contrairement à cela, le voile vertical 13-14 présente une section dégressive d'en bas vers le haut, en partant d'une largeur donnée au niveau de la peau inférieure vers une largeur moindre au niveau de la peau supérieure. Ainsi, la largeur du voile 13-14 est de l'ordre de 6 mm au niveau de la section 13-3 de la peau inférieure alors qu'elle est de l'ordre de 4 mm au niveau de la peau supérieure.

Le profilé 14 comprend une peau supérieure continue 14-1 et une peau inférieure continue 14-2, les peaux inférieure et supérieure étant reliées entre elles par cinq voiles inclinés 14-3 à 14-7 et des voiles verticaux 14-8 et 14-9. Les peaux supérieure et inférieure sont prolongées au-delà des limites indiquées par les voiles verticaux 14-8 et 14-9, par des pattes d'assemblage 14-10 à 14-13. Alors que les pattes d'assemblage 14-10 et 14-11 sont disposées dans le même plan que les peaux supérieure et inférieure, les pattes d'assemblage 14-12 et 14-13 sont étagées vers l'intérieur par rapport à la peau qu'elle prolonge afin de rendre possible l'assemblage du profilé 14 avec un autre profilé tel que le profilé 15 décrit plus loin, et suffisamment longues pour permettre un ajustage de la largeur de la plate-forme lors de son assemblage.

Pour le profilé 14, l'inclinaison des voiles inclinés est la même pour les cinq voiles. De même, l'épaisseur des voiles est la même pour chacun des voiles, à savoir entre 2 et 3 mm. L'épaisseur des voiles verticaux et de la peau inférieure est de l'ordre de 2 à 3 mm. L'épaisseur de la peau supérieure est de l'ordre de 4 à 5 mm.

Le profilé 15 comprend une peau supérieure 15-1, une peau inférieure 15-2, des voiles inclinés 15-3 à 15-7, des voiles verticaux 15-8 et 15-9 ainsi que des pattes d'assemblage 15-10 et 15-11, d'un côté, et 15-12 et 15-13, de l'autre côté. La disposition des voiles verticaux et inclinés et des pattes d'assemblage correspond approximativement à celle du profilé 14 à l'exception de leur disposition de gauche à droite et à l'exception de la disposition des pattes d'assemblage 15-10 et 15-11. En effet, le profilé 15 étant destiné à être assemblé avec le profilé 14, les pattes d'assemblage 15-10 et 15-11 sont disposées en prolongation, c'est-à-dire sans décalage de niveau ou étagement, par rapport à la peau supérieure et inférieure qu'elles prolongent respectivement. En ce qui concerne les dimensions des voiles inclinés et des voiles verticaux ainsi que les angles d'inclinaison des voiles inclinés, leurs valeurs sont du même ordre de grandeur que les valeurs correspondantes du profilé 14, mais non nécessairement identiques.

La Figure 19 montre un assemblage de deux profilés dont aucun ne comprend des voiles verticaux. Ainsi, un profilé 81 et un profilé 82 sont formés de façon à pouvoir être assemblés par emboîtement des faces correspondantes et par soudage après emboîtement. A cette fin, le profilé 81 comprend, entre autres, une peau supérieure 81-1, une peau inférieure 81-2, des voiles inclinés intérieurs 81-3 et 81-4 ainsi qu'un voile incliné 82-5 formant une peau latérale du profilé 81. De façon correspondante, le profilé 82 comprend une peau supérieure 82-1, une peau inférieure 82-2, des voiles inclinés intérieurs 82-3 et 82-4 ainsi qu'un voile incliné 82-5 formant une peau latérale du profilé 82. Les peaux latérales 81-5 et 82-5 respectivement du profilé 81 et 82 sont disposées sur les faces destinées à être assemblées. En conséquence, les inclinaisons de l'un et l'autre des deux voiles inclinés 81-5 et 82-5 sont adaptées l'une à l'autre aussi bien en ce qui concerne la valeur numérique de leur angle d'inclinaison par rapport à la peau inférieure correspondante que leur orientation.

La Figure 20 montre la fixation d'un longeron en dessous d'un profilé faisant partie de la plate-forme selon l'invention.

Dans le cas d'une plate-forme obtenue par assemblage de plusieurs profilés, on prévoit l'utilisation d'un profilé spécialement conçu à cet effet. Dans l'exemple représenté sur la Figure 1, il s'agit des profilés 13 et 16, décrits en détail en référence à la Figure 16,

Selon cette conception, un longeron 90 comprenant une lame 91 et une tête transverse 92, est disposé dans le même plan que le voile vertical 13-14. Le soudage de la lame 91 au profilé 13 est facilité par le profil 13-15 servant comme pied de soudage, solidaire du profilé 13. La conception particulière du voile vertical central 13-14 du profilé 13, telle qu'expliquée plus haut, permet de prendre en charge les efforts transmis par le longeron.

Les signes de référence insérés après les caractéristiques techniques mentionnées dans les revendications, ont pour seul but de faciliter la compréhension de ces dernières, et n'en limitent aucunement la portée.

## Revendications

1. Plate-forme (1, 2) pour un véhicule utilitaire, formée par au moins deux profilés (14, 15) en métal léger disposés longitudinalement dans le sens de la marche du véhicule, les profilés ayant une structure en treillis rendant la plate-forme autoportante, **caractérisée en ce que** deux des profilés (14, 15) sont formés, aux bords latéraux destinés à être mis en regard, avec des pattes d'assemblage (14-10 à 14-13, 15-10 à 15-13) de longueurs différentes permettant un assemblage des profilés par emboîtement des faces correspondantes et par soudage après emboîtement, et un ajustage de la largeur de la plate-forme lors de son assemblage.

2. Plate-forme selon la revendication 1, **caractérisée en ce que** la structure de chacun des profilés (14, 15, 81, 82) est formée par une peau supérieure (14-1, 15-1, 21-1, 82-1) et une peau inférieure (14-2, 15-2, 81-2, 82-2) reliées entre elles par des voiles inclinés (14-3 à 14-7, 15-3 à 15-7, 81-3 à 81-5, 82-3 à 82-5).

3. Plate-forme selon la revendication 2, **caractérisée en ce que** les peaux supérieure et inférieure sont également reliées entre elles par des voiles verticaux (14-8, 15-8, 14-9, 15-9).

4. Plate-forme selon l'une quelconque des revendications 1 à 3, **caractérisée en ce que** l'un des profilés (105) est formé de façon à recevoir, par clipsage, un élément d'équipement (140).

5. Plate-forme selon l'une des revendications 1 à 3, **caractérisée en ce que** l'un des profilés (19) est formé en une seule pièce avec des éléments d'arrimage.

6. Plate-forme selon l'une quelconque des revendications 1 à 5, **caractérisée en ce que** l'un des profilés (21) est formé de façon à recevoir, par clipsage, des éléments de plancher (27, 28).

7. Châssis d'un véhicule utilitaire, **caractérisé en ce qu'**il est exempts de traverses et **en ce qu'**il est pourvu d'une plate-forme (1, 2, selon l'une quelconque des revendications 1 à 6.

8. Châssis selon la revendication 7, **caractérisé en ce qu'**il comprend deux longerons (20).

9. Châssis selon la revendication 7 ou 8, **caractérisé en ce qu'**il est pourvu d'un essieu et **en ce que** les soudures reliant le profilé, les longerons éventuels et l'essieu entre eux sont disposés longitudinalement.

10. Véhicule utilitaire dont le châssis est exempt de traverses, **caractérisé en ce qu'**il comprend une plate-forme selon l'une quelconque des revendications 1 à 6.

## Patentansprüche

1. Plattform (1, 2) für ein Nutzfahrzeug, die aus mindestens zwei Leichtmetallprofilen (14, 15) gebildet ist, die in Fahrtrichtung des Fahrzeugs gesehen längs angeordnet sind, wobei die Profile eine Fachwerkstruktur aufweisen, die die Plattform selbsttragend macht, **dadurch gekennzeichnet, daß** zwei der Profile (14, 15) an den Seitenrändern, die einander gegenüberliegend angeordnet werden sollen, mit Montageansätzen (14-10 bis 14-13, 15-10 bis 15-13) unterschiedlicher Länge versehen sind, die ein Zusammenfügen der Profile durch Ineinanderschieben der entsprechenden Ansatzflächen und anschließendes Verschweißen sowie ein Justieren der Breite der Plattform während deren Zusammenbau ermöglichen.

2. Plattform nach Anspruch 1, **dadurch gekennzeichnet, daß** die Fachwerkstruktur jedes der Profile (14, 15, 81, 82) von einer Oberhaut (14-1, 15-1, 21-1, 82-1) und einer Unterhaut (14-2, 15-2, 81-2, 82-2) gebildet ist, die miteinander durch geneigte Strebwände (14-3 bis 14-7, 15-3 bis 15-7, 81-3 bis 81-5, 82-3 bis 82-5) verbunden sind.

3. Plattform nach Anspruch 2, **dadurch gekennzeichnet, daß** die Oberhaut und die Unterhaut auch durch vertikale Strebwände (14-8, 15-8, 14-9, 15-9) miteinander verbunden sind.

4. Plattform nach einem der Ansprüche 1 bis 3, **dadurch gekennzeichnet, daß** eins der Profile (105) derart ausgebildet ist, daß es durch Anklippen ein Ausrüstungselement (140) aufnimmt.

5. Plattform nach einem der Ansprüche 1 bis 3, **dadurch gekennzeichnet, daß** eins der Profile (19) als einstückiges Bauteil mit Befestigungselementen ausgeführt ist.

6. Plattform nach einem der Ansprüche 1 bis 5, **dadurch gekennzeichnet, daß** eins der Profile (21) eine derartige Form aufweist, daß es durch Anklippen Bodenelemente (27, 28) aufnimmt.

7. Fahrgestell eines Nutzfahrzeugs, **dadurch gekennzeichnet, daß** es frei von Querträgern ist und daß es mit einer Plattform (1, 2) nach einem der Ansprüche 1 bis 6 versehen ist.

8. Fahrgestell nach Anspruch 7, **dadurch gekennzeichnet, daß** es zwei Rahmenlängsträger (20) umfaßt.

9. Fahrgestell nach Anspruch 7 oder 8, **dadurch gekennzeichnet, daß** es mit einer Wagenachse versehen ist und daß die Schweißnähte, die die Profile, die eventuellen Längsträger und die Wagenachse miteinander verbinden, längs verlaufend angeordnet sind.

10. Nutzfahrzeug, dessen Fahrgestell frei von Querträgern ist, **dadurch gekennzeichnet, daß** es eine Plattform nach einem der Ansprüche 1 bis 6 umfaßt.

## Claims

1. Utilitarian vehicle platform (1, 2) comprising at least two section pieces (14, 15) made of light metal arranged longitudinally in the direction of travel of the vehicle, the section pieces having a mesh structure to make the platform self-supporting, **characterized in that** two of the section pieces (14, 15) are provided at the facing lateral edges with assembly lugs (14-10 to 14-13, 15-10 to 15-13) having different lengths allowing a fitting assembly of the section pieces by means of the corresponding faces and welding after fitting and adjustment of the width of the platform during the assembly thereof.

2. Platform according to claim 1, **characterized in that** the structure of each of the section pieces (14, 15, 81, 82) is made of an upper (14-1, 15-1, 21-1, 82-1) and a lower skin (14-2, 15-2, 81-2, 82-2) connected together by inclined struts (14-3 to 14-7, 15-3 to 15-7, 81-3 to 81-5, 82-3 to 82-5).

3. Platform according to claim 2, **characterized in that** the upper and lower skins are also connected together by 15 vertical struts (14-8, 15-8, 14-9, 15-9).

4. Platform according to any one of claims 1 to 3, **characterized in that** one of the section pieces (105) is made in such a way that it can have an element of equipment (140) clipped into it.

5. Platform according to one of claims 1 to 3, **characterized in that** one of the section pieces (19) is made as a single piece with fastening elements.

6. Platform according to any one of claims 1 to 5, **characterized in that** one of the section pieces (21) is made in such a way that flooring elements (27, 28) can be clipped into it.

7. Utilitarian vehicle chassis, **characterized in that** it is free of crossmembers and **in that** it is provided with a platform (1, 2) according to any one of claims 1 to 6.

8. Chassis according to claim 7, **characterized in that** it comprises two girders (20).

9. Chassis according to claim 7 or 8, **characterized in that** it has an axle and **in that** the welds connecting the section piece, the optional girders and the axle together are arranged longitudinally.

10. Utilitarian vehicle the chassis of which is free of crossmembers, **characterized in that** it comprises a platform according to any one of claims 1 to 6.
